# EUROPEAN PATENT SPECIFICATION

(11) **EP 1 639 193 B1**
(45) Date of publication and mention of the grant of the patent: **16.08.2017**
(21) Application number: 04741918.9
(22) Date of filing: 29.06.2004
(51) Int. Cl.: D06N 3/08, D06N 7/00, B29C 59/04, B29C 59/16, B32B 3/26, B32B 3/30, B32B 5/20, B32B 27/12, B32B 37/00, B32B 38/00

(54) **SELECTIVELY EMBOSSED SURFACE COVERINGS AND PROCESSES OF MANUFACTURE**
WAHLWEISE GEPRÄGTE OBERFLÄCHENBESCHICHTUNGEN UND VERFAHREN ZU DEREN HERSTELLUNG
REVETEMENTS DE SURFACE A GAUFRAGE SELECTIF ET PROCEDES DE FABRICATION

(30) Priority: 02.07.2003 EP 03101984
(43) Date of publication of application: 29.03.2006
(73) Proprietor: Tarkett SAS, 92000 Nanterre (FR)
(72) Inventor: DAO VIET, Dung, B-4920 AYWAILLE (BE); SIMON, Jean-Yves, B-6810 CHINY (BE)
(74) Representative: Pronovem
(86) International application number: PCT/EP2004/051286
(87) International publication number: WO 2005/005713

(56) References cited:
- WO-A-03/057458
- US-A- 4 298 646
- US-A- 4 491 616
- US-A- 4 608 294
- US-A1- 2001 002 293

## Description

### Field of the Invention

The present invention has to do with a process for manufacturing mechanically embossed synthetic surface coverings and the products obtained thereby. More particularly, the invention relates to floor coverings, which are mechanically embossed and processed to create selectively embossed surface areas, thereby creating products having a more realistic appearance including different gloss levels. These appearances include, for example, ceramic tile, stone, brick, sandstone, cork, wood, and in some embodiments textured lines or grout lines there between, as well as combinations thereof such as sandstone and ceramic tile, textured wood and smooth ceramic, cork and wood, and stone or slate in combination with ceramic tile.

### Description of the-Related Art

Synthetic surface coverings including sheet flooring, wall coverings and tile are employed in residential, commercial and institutional applications where decorative effects, durability and ease of installation and maintenance are important considerations. These surface coverings can be designed to imitate a variety of masonry materials such as ceramic tile, stone and brick or they can be designed with unique combinations of color, particles and other decorative features that are not available in other types of surface coverings. In the current marketplace/consumers are increasingly demanding synthetic surface coverings with improved textural features such as features which realistically imitate not only the textures of materials such as ceramic tile, stone, brick, sandstone, cork, wood and combinations thereof, but also the texture of the grout or mortar which typically is used by a mason or other craftsman to fill the joints between such materials to secure them in their desired position relative to one another.

The surface covering industry has employed mechanical embossing, chemical embossing, combinations of mechanical and chemical embossing, screen printing and other techniques for years in order to obtain design effects and textures which meet consumer demands. In U.S. Patent No. RE. 33,599 a process is described for obtaining selective matting on synthetic coverings by depositing on an expandable or nonexpandable support substrate (1) a polymer coating which contains at least one first polymerization initiator onto at least a first selected zone and (2) at least one second coating comprised of a crosslinkable monomer which contains at least one second polymerization initiator onto at least a second selected zone. The second zone may encompass at least a portion of the first zone. The first and second initiators are triggered by distinct "spectral zones". Following pre-gelling, an overall graining operation is carried out over at least a portion of the surface followed by curing the first selected zone and thereby fixing the graining thereon. Then gelling is carried out to cause the graining in the second zone to smooth out. The product has a selectively matted appearance. Other methods of making differential gloss products are described in U.S. Patent No. 4,298,646 and U.S. Patent No. 4,491,616.

The surface texture effects of the present invention are obtained by creating relatively deep emboss depths as compared with the shallow graining or dusting techniques employed to obtain the matted or differential gloss effects of the patents noted above. More specifically, the present invention is directed to the realistic imitation in surface coverings not only of the surface texture of a variety of - masonry materials such as ceramic tile, stone, brick, sandstone, cork, wood and combinations thereof, but also in some embodiments to the realistic imitation of the surface texture of the grout or mortar in the joints between such materials.

### SUMMARY OF THE INVENTION

In accordance with the present invention, a novel process is provided for obtaining selective areas of distinctive appearance, e.g., textured grout lines, on the surface of a synthetic surface covering.

Accordingly the invention provides a new and improved method of making a surface covering as claimed in claim 1.

In the method according to the invention at least a portion (preferably the whole portion) of said first photoinitiator used in step (c) migrates into the gelled plastic layer and into the curable coating during and after step (e). In step (g) the softened curable coating is mechanical embossed overall with a specific structure such as that imitating grout. In step (h) said first photoinitiator is activated in an enclosure by means of an appropriate electromagnetic wave or light (for example UV light) so as to cure the curable coating in those areas overlying said printing ink. Upon exiting the activating enclosure, the product enters a fusion oven in step (i) wherein that portion of the curable coating, which does not overlie said printing ink and has thus not been cured, smoothes out such that the grout imitating texture disappears in those areas. The surface of the curable coating which has smoothed out may then optionally be mechanically embossed a second time but now with a structure which imitates for example the texture of stone, wood or the like. Thereafter, the product enters a second activating enclosure in step (k) where the curable coating in at least those unprinted areas thereof is cured by appropriate means (for example by electron beam irradiation) so as to cure the curable coating in those unprinted areas, i.e. those areas which do not overlie said printing ink.

In a further preferred embodiment, to obtain such a product, a foamable plastic layer containing a foaming agent is applied over a sheet substrate. The combination is then heated to gel the plastic layer without activating the foaming agent. A first printing ink containing a photoinitiator and an expansion inhibitor is then applied in a first pattern on the gelled plastic layer, whereupon a portion of the inhibitor migrates into the gelled plastic layer. Following the printing steps, a first, non-curable coating made from a plastisol or organosol is applied over the entire surface of the gelled plastic layer, including the first and optionally second printing inks. After this, a second, curable coating is applied over the first non curable coating and a portion of the photoinitiator in the printing ink migrates into the coatings. The coatings are then gelled, with or without a cooling step, followed by surface softening through the use of heat. The softened coatings are then mechanically embossed overall with a texture, such as that imitating grout, whereupon the product is cured by exposure within an enclosure to UV light to set the grout texture in those portions of the curable coating overlying the printing ink, which contains a photoinitiator. Upon exiting the UV enclosure, the product enters a fusion and expansion oven wherein that portion of the curable coating which does not overlie the printing ink containing the photoinitiator smooths out such that the grout imitating texture disappears in those areas. Furthermore, those portions of the gelled plastic layer, which do not contain the inhibitor applied with the printing ink, foam and expand. The surface of the curable coating which has smoothed out may then optionally be mechanically embossed a second time but now with a texture which imitates the texture of stone, wood or the like as hereto before described. Thereafter the product enters a second activating enclosure in step (k) where the curable coating in at least those unprinted areas thereof is cured by appropriate means so as to cure the curable coating in those unprinted areas, i.e. those areas which do not overlie said printing ink.

The curable coating preferably comprises an urethane-derived polymer, more preferably, it comprises polyurethane and most preferably it essentially consists in polyurethane.

The curable coating may also further comprises a thermal initiator, which is activated during step k) or even during step i), if a second embossing step is not used.

As will be appreciated by one of ordinary skill in the art, more than one printing ink can be used in the process and product of the invention and each of the inks can optionally contain a photoinitiator and/or an inhibitor. Of course, printing inks, which do not contain a photoinitiator or an inhibitor, can be employed in combination with inks, which do contain a photoinitiator, and/or an inhibitor in order to obtain desired decorative effects.

In still another embodiment of the invention, calendared and/or extruded sheets can be employed in place of the foamable and/or curable coatings as explained in the detailed description below.

In the method according to the invention, photoinitiator means an initiator adapted to initiate curing (for example crosslinking) of the curable coating when activated by a specific electromagnetic energy.

The second photoinitiator may be introduced in the curable coating at any time before the product entering the activating enclosure in step (k). In one embodiment, it is introduced after the product has left the activating enclosure of step (h) i.e. after said first photoinitiator of the printing ink has been activated in step (h). In such a case a liquid photoinitiator may be applied onto the surface of the curable coating.

In another embodiment, said second photoinitiator is introduced in the curable coating prior to step (h) i.e. before the product entering the activating enclosure in step (h). In this embodiment the second photoinitiator is selected among those which are not sensitive to the normal activating conditions of said first photoinitiator, and the activating conditions prevailing in the activating enclosure of step (h) are so adapted as to specifically prevent activating said second photoinitiator. In this embodiment different ways are possible to select a convenient second photoinitiator.

In a first convenient way said second photoinitiator is selected among those having a sensitivity to an activating energy which is higher than the energy necessary to activate said first photoinitiator.

Another convenient way consists in selecting said first photoinitiator among those which are sensitive to a first range of electromagnetic radiation and selecting a second photoinitiator which is sensitive to another range of electromagnetic radiation but not to said first range of electromagnetic radiation.

In a still further embodiment of the method according to the invention said second photoinitiator is selected among those having a migration time into said surface area of the curable coating greater than the migration time of said first photoinitiator into said surface area of the curable coating.

In the embodiments just described the second photoinitiator may be introduced in the curable coating by any convenient means. A particularly convenient means consists in applying said second photoinitiator as a liquid onto the whole surface of the curable coating for example by brushing, painting or spraying. Liquid solutions of said curable photoinitiator are especially preferred.

The activation of the photoinitiators in steps (h) and (k) is advantageously executed by means of electromagnetic radiations. Röntgen radiations are convenient. Ultra violet radiations (UV radiations) are preferred.

In a preferred embodiment of the method according to the invention it is preferred to select a curable coating, which is essentially free from any thermal curing or crosslinking initiator. More preferably, the curable coating is substantially free from any thermal curing or crosslinking inititiator.

### BRIEF DESCRIPTION OF THE DRAWINGS

FIG. 1 is a flow diagram of a process of the invention.
FIG. 2 is a fragmentary sectional view through a product made according to the process illustrated in FIG. 1 prior to applying a curable coating over the gelled plastic layer. This view and those of FIGS. 3 and 4 are only for illustrative purposes and it is not intended that the thickness of the various layers of components shown are drawn to scale.
FIG. 3 is a fragmentary sectional view through a product made according to the process illustrated in FIG. 1 at the time of the first UV curing step (step h).
FIG. 4 is a fragmentary sectional view through a product made according to the process illustrated in FIG. 1 after the second UV curing step (step k).

### DETAILED DESCRIPTION OF THE PREFERRED EMBODIMENTS

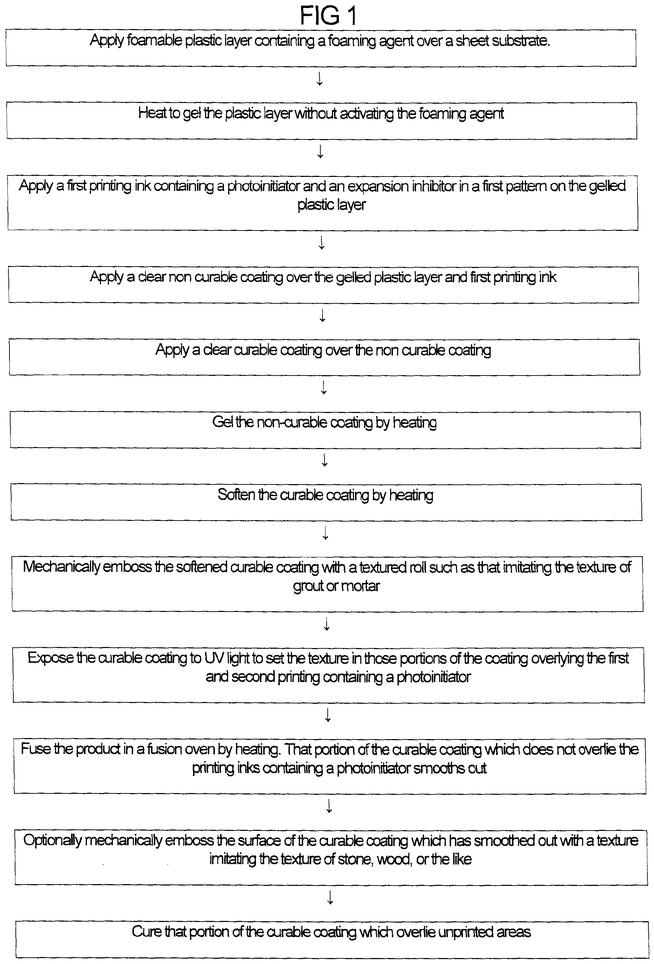

Referring to FIG. 1, a foamable plastic layer containing a foaming agent is applied over a sheet substrate. The combination is then heated to gel the plastic layer without activating the foaming agent. A first printing ink containing a first photoinitiator is then applied in a first pattern or design onto the gelled plastic layer using conventional techniques. A second printing ink containing an expansion inhibitor and a second photoinitiator is then applied to the gelled plastic layer in a second pattern or design, again using conventional techniques, whereupon the inhibitor present in the second printing ink migrates into the gelled plastic layer beneath the second printing ink. Both photoinitiators may be the same or different. They are advantageously ultraviolet radiation initiators i.e. photoinitiators which are adapted to initiate the curing or crosslinking of a polymeric material when activated by a specific electromagnetic energy in the UV spectrum. The inhibitor must be chosen so that the rate at which it will migrate from the second printing ink into the gelled plastic layer is compatible with the speed of the overall process of making the surface covering. It will be appreciated that the second ink pattern may advantageously be a joint between two tiles so as to imitate ceramic tiling. However, the present invention is not limited to such a design and may represent any desired design. It will also be appreciated that the terms "first printing ink" and "second printing ink" serve only to differentiate the inks and do not necessarily refer to the order in which they are applied to the gelled plastic layer or directly to the substrate neither does it imply that there are only two printing inks to achieve the desired product pattern in the desired colors.

A clear, non-curable polymeric coating is next applied over the entire surface of the gelled plastic layer including the first and second printing inks. A second curable coating is then applied over the non-curable coating.

The photoinitiators residing in the first and second printing inks subsequently migrate into the curable coating, which has been applied over the non-curable coating and the inks. The photoinitiators must be chosen so that the rate at which they will migrate from the printing inks into the curable coating is compatible with the speed of the overall process of making the surface covering. The combination of substrate, plastic layer, first and second printing inks, and non curable and curable coatings is then heated to gel the curable coating. The surface of the both coatings is then softened by heat whereupon the softened both coatings is mechanically embossed with an overall textured roll using conventional techniques. The textured roll preferably imitates the texture of sand, cementitious grout, mortar, cork, terrazzo or the like as hereto before described.

To fix the embossed texture in those areas of the curable coating overlying the first and second printing inks, the curable coating enters an enclosure wherein it is irradiated with an UV light of defined energy and wave spectrum. So the UV photoinitiators of both inks which have migrated into the curable coating are activated resulting in a curing (for example crosslinking) of the curable polymeric coating those areas overlying the first and second printing inks.

The product is then placed into a fusion oven where it is heated to about 170°C to 220°C preferably to about 185 - 195°C. The effect is that those portions of the curable coating which do not overlie either the first or second printing ink will fluidise and relax such that the deformation of the curable coating in these areas attributable to the mechanical embossing by means of the textured roll disappear, i.e. smooth over, Additionally, that portion of the foamable plastic layer which does not underlie the second printing ink containing an inhibitor, foams and expands.

The product may then be subjected to a second mechanical embossing step, again by conventional techniques, wherein another texture such as the natural look of stone, wood or the like, as hereinbefore described, is applied to the surface of the curable coating which has smoothed out.

A solution of a curing photoinitiator is applied onto the surface of the curable coating.

The product is then introduced into another enclosure where it is lighted with an UV light of correctly selected energy and wave spectrum so as to have the UV curing photoinitiator of the curable coating activated, resulting in a curing (for example a crosslinking) of the curable polymeric coating in those areas which are outside the first and second printing inks.

An important feature of the process and product of the present invention is that the entire surface of the product may be initially textured in the first mechanical embossing step without necessitating a special patterned texturing roller controlled in register with the design or decoration of the surface covering. This is because the surface areas of the curable coating which are not fixed after the first mechanical embossing step will be softened during the subsequent fusion and expansion treatment and will become smooth because of heat relaxation of plastic memories as taught in U.S. Patent No. 3,887,678.

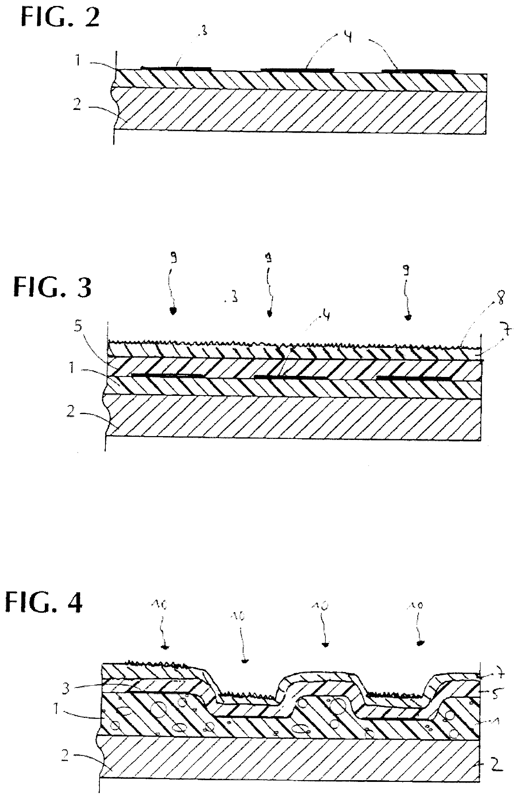

A product having the construction illustrated in FIGS. 2 to 4 is prepared by the process of FIG. 1. Referring to FIG. 2, a foamable plastic layer 1 containing a foaming agent is applied over a sheet substrate 2. The combination is then heated to gel the plastic layer 1. A first printing ink 3 which contains an UV photoinitiator and a second printing ink 4 which contains an expansion inhibitor and an UV photoinitiator are applied in a first and second pattern, respectively, onto the gelled plastic layer 1.

A clear, non curable coating 5 (see FIG. 3) is applied over the entire surface of the gelled plastic layer 1 and the first and second printing inks 3, 4.

A curable coating 7 is then applied over the non-curable coating 5.

After heating both the non curable 5 and the curable coating 7 to gel and soften them, the softened coatings 5,7 are mechanically embossed in a first embossing step with a textured roll to create a first texture 8. The textured curable coating is then subjected to ultra violet light 9 to activate the UV photoinitiators of both inks and thus cure that portion (and only that portion) of the curable coating 7 overlying both ink patterns or designs 3, 4. Thereafter the product is heated in an oven to cause that portion of the coatings 5,7 which does not overlie the printing inks 3, 4 to smooth out so that the textures attributable to the first mechanical embossing step disappear in that portion (see FIG. 4). Furthermore, that portion of the gelled plastic layer 1 which does not contain the inhibitor applied with the second printing ink 4, foams and expands. The surface areas of the curable coating which have smoothed out may then be mechanically embossed in a second embossing step to create a second texture.

A solution of a curing UV photoinitiator (not shown) is applied onto the surface of the curable coating 7.

The product is then subjected to ultraviolet light 10 to activate the curing UV photoinitiator and thus cure those portions of the curable coating, which are outside the printing ink areas 3 and 4.

Each component of the product and each step of the process of the invention will now be described with reference to various preferred and alternative embodiments.

### The Substrate

The substrate is a relatively flat, fibrous or non-fibrous, backing sheet material, such as a fibrous, felted or matted, relatively flat sheet of overlapping, intersecting fibers. The substrate can, if desired, comprise felts or papers, which are woven or non-woven. It can comprise knitted or otherwise fabricated textile material or fabrics made from cellulose, glass, natural or synthetic organic fibers, or natural or synthetic inorganic fibers, or supported or non-supported webs or sheets made therefrom, or filled or unfilled thermoplastic or thermoset polymeric materials. It can also comprise a compact or foamed layer. These and other substrate base materials are well known in the art and need not be further detailed here.

### The Foamable Plastic Layer

The foamable plastic layer, when used, can be comprised of any suitable material known in the art for producing foamed plastic layers on a substrate, but is typically a polyvinylchloride ("PVC") plastisol, an organosol, a polyolefin, an ionomer, plasticized PVC or thermoplastic rubber. This layer can be pigmented or free of pigmentation. If the layer is pigmented, a color is preferably selected which is the average of the colors of the end product so that the appearance and aesthetics of the product are maintained during its working life. To one skilled in the art, the average color means the color perceived when one looks at a surface from a distance of more than about five feet (about 1.5 m).

The foamable plastic layer may include any of the various PVC resin materials normally used in connection with coating of decorative sheet materials and may specifically include, but are not limited to, those described in U.S. Patent No. 3,458,337. While a suitable foaming agent or blowing agent as taught by the above-mentioned patent may be used, a blend of azodicarbonamide ("ABFA") and p.p'oxybis (benzene sulfonyl hydrazide) ("OBSH") foaming agents can be used instead. Additional conventional ingredients such as stabilizers, foaming or blowing agent catalysts, etc. can be used, of course the catalyst is required if chemical inhibition is required. Although the preferred foamable plastic layer is a PVC homopolymer resin, other vinyl chloride resins can be employed. Other synthetic resins are suitable such as polystyrene, substituted polystyrene (preferably wherein the substituents are selected from the group consisting of alkyl having 1-10 carbons, preferably 1-4 carbons, and aryl having 6-14 carbons), polyolefins such as polyethylene and polypropylene, acrylates and methacrylates, polyamide, polyesters and any other natural or synthetic resin.

The composition of the foamable plastic layer must be compatible with the underlying substrate and the printing inks and, when gelled, must provide a smooth and uniform surface for the first and second printing inks. The composition also must be otherwise compatible with the overall product composition and, therefore, within the principles of this invention. As indicated, it is not essential that a plastisol be used as the foamable plastic layer. Organosols and aqueous latexes are also of use, employing as the dispersing or suspending media, organic solvents and water, respectively, rather than plasticizers as in the case of a plastisol.

The foamable plastic layer is substantially uniformly applied in its liquid state to the underlying substrate by conventional means such as a knife-over roll coater, direct roll coater, rotary screen, draw down bar, reverse roll coater or wire wound bar. The particular means for applying the foamable plastic layer does not relate to the essence of the invention, and any suitable coating means can be employed.

The thickness of the foamable, liquid plastic layer as it is applied to the underlying surface is substantially uniform and is in the range from about 2 to about 30 mils (about 50 to about 765 µm), preferably from about 6 to about 16 mils (about 150 to about 410 µm). The layer can be thicker or thinner as may be required by the particular product application.

Instead of a foamable plastic layer, a plastic layer which does not contain a foaming or blowing agent can be applied to the underlying substrate in the same manner as described above.

### Gelling

After the foamable, liquid, plastic layer containing a foaming agent is applied over the substrate, the combination is heated for a period of time and at a temperature sufficient to gel the plastic layer, but not sufficient to activate or decompose the blowing or foaming agent, This can be done in an oven or on a heated chrome drum. If an oven is used for the gelling step, a residence time in the oven from about 0.5 minutes to about 3.5 minutes at an oven temperature from about 120°C to 160°C will give good results. If a chrome drum is used, a dwell time on the drum from about 8 seconds to about 30 seconds at a drum temperature of from about 110°C to about 140°C... will give good results. The higher temperatures are used with shorter residence or dwell times and lower temperatures with longer times. The layer is then cooled to provide a surface suitable for printing. Cooling is generally accomplished by contacting the surface of the foamable, gelled plastic layer (and sometimes the underside of the substrate) with one or more cooling drums. Ambient or chilled water is circulated through the drums. Cooling may be enhanced with the use of fans or blowers. The same gelling process can be employed if the plastic layer does not contain a foaming or blowing agent as will be apparent to those skilled in the art. Also calendaring or extrusion techniques followed by lamination onto a substrate of a sheet of similar formulations as above can be used to prepare the printable layer.

### The Printing Inks

In the foregoing preferred embodiment, a first printing ink containing a photoinitiator is applied in a first pattern or design onto the gelled plastic layer. Then, a second printing ink containing a photoinitiator and an expansion inhibitor is applied in a second pattern or design onto the gelled plastic layer. Suitable printing inks include those normally used in the manufacture of surface coverings. These include plastisol, solvent-based systems and water-based systems. Of course, in addition to the first and to the second printing ink, other printing inks which do not contain a photoinitiator or an expansion inhibitor can be applied to obtain design objectives. Furthermore, it is not necessary to employ both the first and second printing inks as long as at least one printing ink with a photoinitiator is employed. Either ink can be employed alone or in combination with other printing inks which do not contain a photoinitiator or an expansion inhibitor. If no foamable plastic layer is employed then inks having an expansion inhibitor are not employed.

The first, second and other printing inks may be pigmented or non-pigmented and may include organic pigments or inorganic pigment particles such as titanium dioxide, iron oxide, carbon black, mica, pearlescent and the like. Decorative reflective particles such as metallics, may also be included as part of one or more printing ink compositions. The types and components of the first, second and other printing inks can be the same or different.

The first and second printing inks contain a photoinitiator. By way of example only, and not by limitation, the following ultraviolet crosslinking initiators may be used in accordance with the present invention: benzophenone, 2-chloro-thioxanthone, 2-methyl-thioxanthone, 2-isopropyl-thioxanthone, benzoin, 4,4'-dimethoxybenzoin, benzoin ethyl ether, benzoin isopropyl ether, benzyldimethylketal, 1,1,1-trichloro-acetophenone, 1-phenyl-1,2-propanedione-2-(ethoxycarbonyl)-oxide, diethoxyacetophenone, and dibenzosuberone. The inks containing the photoinitiators should contain about 1 % to about 15%, preferably about 10% by weight of photoinitiator.

The second printing ink also contains an expansion inhibitor. By way of example only, and not by limitation, the following inhibitors may be used in accordance with the present invention: benzotriazole, tolyltriazole, fumaric acid and trimellitic anhydride. The specific expansion inhibitor which is used does not relate to the essence of the present invention and many other suitable and acceptable expansion inhibitors are available to one of ordinary skill in the art.

Prinking of the inks onto the gelled plastic layer can be effected by rotogravure, flexigraphic, screen printing, pad or knurled printing, or other printing techniques conventionally employed in making floor or wall covering products.

When the second printing ink is applied to the gelled plastic layer, the inhibitor present in the second printing ink migrates into the gelled plastic layer beneath the second printing ink.

It will be appreciated that in the present invention that one ink, two inks or multiple inks may be used to print patterns or designs on the substrate or on the gelled plastic layer. Each ink may optionally contain a photoinitiator and/or an inhibitor. Of course ink without photoinitiators or inhibitors can be used to obtain design objectives. It will also be appreciated that the order of printing is not critical and is not to be construed as a limitation of the invention. Furthermore, it is to be understood that the print areas of the inks may overlap.

### The non curable coating

After the printing inks have been applied to the gelled plastic layer, a liquid, non curable coating is applied over the entire surface of the gelled plastic layer including over the first and second printing inks.

The thickness of the non curable coating as it is applied in its liquid, tacky, ungelled state to the gelled plastic layer and inks is substantially uniform and is in the range from about 80 µm to about 400 µm, preferably from about 100 µm to about 250 µm. The coating can be thinner or thicker as may be required by the particular product application. The non curable coating is applied by conventional means such as described above with respect to application of the foamable plastic layer. The particular means for applying the non-curable coating does not relate to the essence of the invention and any suitable coating means can be employed.

The non-curable coating is preferably a clear (transparent) layer but it can be slightly tinted as long as it remains translucent and allows electromagnetic radiations (preferably UV) penetration. The non-curable coating may also contain solid particulates such as chips, flakes, flitters, etc.

This non-curable coating is essentially free of any thermal curing, crosslinking or polymerisation initiator. In the preferred embodiment, the photoinitiators residing in the first and second printing inks then migrate through that portion of the non curable layer which was applied over the first and second printing inks into the curable coating applied above. The non-curable coating is adhered onto the printed gelled plastic layer by any convenient means known in the art, for example laminating.

### The Curable Coating

In the method according to the invention a curable coating is applied onto the non-curable coating and advantageously comprise and preferably consist in polyurethane.

### Heating and First Embossing Step

To prepare the coatings for mechanical embossing, both the curable coating and the non-curable coating are softened by heating. The product is passed through an oven maintained at a temperature from about 100°C to about 160°C, preferably from about 130°C to about 140°C, for a residence time from about 1 to 5 minutes. A hot air recirculating oven and/or an infrared ("IR") oven operated at these temperatures is generally employed. The product surface is then softened by heat, preferably by means of an IR oven, to a temperature from about 120°C to 190°C, preferably 150°C to 170°C, as measured by a pyrometer, before the embossing rollers nip.

Once the coatings have been adequately softened, they are mechanically embossed by means of a textured roll, which imitates the texture of sand, cementitious grout, mortar or the like as hereinbefore described. The textured roll operates under a pressure that depends upon the degree of texturing desired as is known by a person having ordinary skill in the art.

### First Ultraviolet ("UV") Curing

The product may be cooled before it is UV cured. It is not a requirement but it reduces the fumes in the UV enclosure, which would reduce the UV transference to the product. Once the first embossing step has been completed, the product enters an enclosure where it is subjected to the radiations of a UV lamp to cure that portion of the curable coating overlying the first and second printing inks containing a photoinitiator. This step fixes the embossed texture into the surface areas of the coating disposed over the ink containing the photoinitiator.

The UV curing step can occur in a UV reactor wherein the product is subjected to about 10 to about 150 milliJoules per square centimeter (mJ/sq. cm.), preferably about 30 mJ/sq. cm., at about 20 to about 160 watts per cm of adjustable power using H-type, V-type, or D-type bulbs, preferably H-type bulbs.

### Fusion and Expansion

After portions of the curable coating have been cured in the above-described enclosure, the product obtained therefrom is introduced to a fusion oven maintained at a temperature from about 170°C to about 220°C, preferably about 190°C. The product has a residence time in the oven from about 0.5 to about 3 minutes. A hot air recirculating oven and/or an IR oven operated at these temperatures is generally employed.

Subjecting the product to these temperatures for this period of time fuses the substrate, the plastic layer, the printing inks and the coatings together and foams and expands those portions of the foamable plastic layer which do not underlie the second printing ink which contains an inhibitor. Furthermore, those portions (i.e., surface areas) of the curable coating which were not previously cured, i.e., do not overlie either the first or second printing inks, will relax such that the deformation and texturing in the still curable coating in these areas attributable to the first mechanical embossing step to this portion disappear, i.e. smooth over. More particularly, during this step that portion of the curable coating which has not been cured (crosslinked) during UV exposure undergoes relaxation, which has the effect of smoothing the textured surface, while that portion of the curable coating that has been cured during UV curing retains its textured appearance. This relaxation phenomenon is one that requires the first overall embossing to be conducted at a temperature as low as possible to minimize the plastic component of the mechanical deformation induced in the curable coating by the embossing roll.

### Second Embossing Step (Optional)

After being removed from the fusion oven, those portions of the curable coating (now the cured coating) which do not overlie the printing inks and hence have smoothed out, are mechanically embossed a second time by means, known to those of ordinary skill in the art, such as a texture roll, or other conventional means containing textures such as the natural looking texture of stone, wood or the like as hereto before described.

### Second Ultraviolet ("UV) Curing

The product from the Fusion Step (or optionally the Second Embossing Step) may be cooled before it is UV cured for reasons explained hereabove regarding the First Ultraviolet Curing. The product then enters an enclosure where it is subjected to the radiations of a UV lamp to cross-link that portion of the curable coating overlying the unprinted areas. This step fixes the embossed texture into those surface areas of the coating.

The UV curing step can occur in a UV reactor wherein the product is subjected to about 400 to about 1000 milliJoules per square centimeter (mJ/sq. cm.), preferably about 600 mJ/sq. cm., of focused or diffused UV radiation, preferably focused radiation, at about 200 to about 600 milliwatts per cm of adjustable power using H-type, V-type, or D-type bulbs, preferably H-type bulbs. Such a UV reactor is available from 1ST (Germany).

### Use of Calendared or Extruded Layers

As noted above, calendared or extruded sheets can be employed as layers in place of any one or both of the foamable layer and/or curable layer. When a foamable sheet is employed it is formed by calendering or an extrusion die at a temperature below the decomposition temperature of the foaming or blowing agent, or the catalyzed foaming or blowing agent. When a sheet is used in place of the curable layer, it is processed by calendering or an extrusion die under conditions which do not significantly decompose the peroxide, so that it remains a curable layer. When sheet materials are used they are laminated to the underlying surface of the product by employing techniques known by those having ordinary skill in the art.

## Claims

1. A method of making a surface covering which comprises the sequential steps of:
a. applying a plastic layer over a substrate,
b. heating the plastic layer to a temperature which gells the plastic layer to form a gelled plastic layer having a surface,
c. applying to the surface of the gelled plastic layer a first printing ink containing a first photoinitiator in a first pattern or a first design,
d. applying a first, non-curable coating made from a plastisol or organosol over the gelled plastic layer and first printing inks
e. applying a second, curable coating over said first coating and optionally drying it,
f. gelling said first coating,
g. mechanically embossing the second, curable coating,
h. activating said first photoinitiator and curing the surface areas of the second, curable coating disposed over the first printing ink,
i. heating the second, curable coating, the plastic layer and the substrate, wherein the mechanical embossing in areas that are not disposed over the first printing ink is relaxed,
j. optionally mechanically embossing the second, curable coating in areas that are not disposed over the first printing ink
k. curing the second, curable coating.

2. The method according to claim 1 wherein during step g), the first coating is also embossed.

3. The method according to claim 1, wherein the curable coating of step (e) comprises an urethane derived polymer.

4. The method of claim 3, wherein the curable coating of step (e) comprises polyurethane.

5. The method of claim 4, wherein the curable coating of step (e) essentially consists in polyurethane.

6. The method according to any of the claims 1 to 5 wherein after step h) of activating said first photoinitiator a liquid photoinitiator is applied onto the curable coating.

7. The method of any of claims 1 to 5, wherein :
• said curable coating further comprises a thermal initiator
• said thermal initiator is activated during step k).

8. The method according to any of the preceding claims wherein :
• the plastic layer applied in step a) comprises a foaming agent,
• the heating of step b) is performed without activating the foaming agent,
• the first printing ink of step c) further contains an expansion inhibitor
• the foaming agent is activated during step i).

9. The method according to any of the claims 1 to 7 wherein
• the plastic layer applied in step a) comprises a foaming agent,
• the heating of step b) is performed without activating the foaming agent,
• the first printing ink of step c) optionally contains an expansion inhibitor
• between step c) and step d), a second printing ink containing a second photoinitiator and/or an expansion inhibitor is applied to the surface of the gelled plastic layer in a second pattern or a second design,
• the foaming agent is activated during step i),
• the second photoinitiator is activated during step k).

10. The method according to claim 9 wherein the first photoinitiator has a higher diffusion coefficient than the second photoinitiator.

11. The method according to claim 9 wherein said second photoinitiator is selected among those having a migration time into said surface area of the curable coating greater than the migration time of said first photoinitiator into said surface area of the curable coating.

12. The method according to claims 9 wherein the first photoinitiator is activated by a different wavelength than the second photoinitiator.

13. The method according to claim 9, wherein the first photoinitiator is activated by a lower energy level than the second photoinitiator.

14. the method according to claim 9, wherein the first photoinitiator is selected among those which are sensitive to a first range of electromagnetic radiations, and said second photoinitiator is selected among those which are sensitive to second range of electromagnetic radiations but insensitive to said first range of electromagnetic radiations.

15. The method according to any of the claims 9 to 14, wherein said second photoinitiator is applied onto substantially the entire surface of the curable coating prior to step (h) of activating said first photoinitiator.

16. The method according to claim 15, wherein the electromagnetic radiations essentially consist in UV radiations.

17. The method according to any of the claims 1 to 5 wherein
• the plastic layer applied in step a) comprises a foaming agent,
• the heating of step b) is performed without activating the foaming agent,
• the second, curable coating further comprises a thermal initiator
• the thermal initiator is activated during step k)

18. The method according to any of the claims 1 to 5 wherein the curing of step k) is operated by electron beam irradiation.

19. The method of any of the claims 1 to 18, wherein the surface covering is cooled and then the surface is reheated to soften it prior to optionally mechanically embossing.

20. The method of any of the claims 1 to 19, wherein after gelling the plastic layer in step (b) the surface covering is cooled prior to applying the printing ink.

21. A surface covering obtained by the method according to of any of the claims 1 to 20, which comprises:
a. a substrate,
b. a plastic layer overlaying the substrate,
c. an ink printed in a pattern or design on said plastic layer,
d. a non cured coating overlaying the plastic layer and the ink
e. a cured coating overlaying the non-cured coating wherein the cured coating overlaying the ink is mechanically embossed.

22. A surface covering which comprises:
a. a substrate,
b. a foamed and chemically embossed plastic layer overlaying the substrate,
c. an ink containing a photoinitiator printed in a design on said foamed plastic layer,
d. a non cured coating or a non cured layer overlaying the foamed plastic layer and ink
e. a cured coating or a cured layer overlaying the non cured coating or a non cured layer wherein the portion of the cured coating or the cured layer disposed over the ink is chemically and/or mechanically embossed.

23. The surface covering of claim 22 wherein the ink also contains an inhibitor.

24. The surface covering of claim 22 or 23 wherein the portion of the cured coating or cured layer, which is not disposed over the ink, is mechanically embossed with a texture different from the mechanically embossed portion of the cured coating disposed over the ink.

25. The surface covering of any of the claims 22 to 24 further the cured coating or cured layer comprising a polyurethane coating.

## Patentansprüche

1. Verfahren zum Herstellen eines Oberflächenbelags, umfassend die aufeinanderfolgenden Schritte:
a. Aufbringen einer Kunststoffschicht auf ein Substrat,
b. Erhitzen der Kunststoffschicht auf eine Temperatur, die die Kunststoffschicht geliert, um eine gelierte Kunststoffschicht mit einer Oberfläche zu bilden,
c. Aufbringen einer ersten Drucktinte, die einen ersten Photoinitiator umfasst, mit einer ersten Struktur oder einem ersten Design auf die Oberfläche der gelierten Kunststoffschicht,
d. Aufbringen einer ersten, nichthärtbaren Beschichtung aus einem Plastisol oder Organosol auf die gelierte Kunststoffschicht und die ersten Drucktinten,
e. Aufbringen einer zweiten, härtbaren Beschichtung auf die erste Beschichtung und gegebenenfalls Trocknen davon,
f. Gelieren der ersten Beschichtung,
g. mechanisches Prägen der zweiten, härtbaren Beschichtung,
h. Aktivieren des ersten Photoinitiators und Härten der Oberflächenbereiche der zweiten, härtbaren Beschichtung, die über der ersten Drucktinte angeordnet sind,
i. Erhitzen der zweiten, härtbaren Beschichtung, der Kunststoffschicht und des Substrats, wobei die mechanische Prägung in Bereichen, die nicht über der ersten Drucktinte angeordnet sind, entspannt wird,
j. gegebenenfalls mechanisches Prägen der zweiten, härtbaren Beschichtung in Bereichen, die nicht über der ersten Drucktinte angeordnet sind,
k. Härten der zweiten, härtbaren Beschichtung.

2. Verfahren gemäß Anspruch 1, wobei während Schritt g) auch die erste Beschichtung geprägt wird.

3. Verfahren gemäß Anspruch 1, wobei die härtbare Beschichtung von Schritt (e) ein Urethanabgeleitetes Polymer umfasst.

4. Verfahren gemäß Anspruch 3, wobei die härtbare Beschichtung von Schritt (e) ein Polyurethan umfasst.

5. Verfahren gemäß Anspruch 4, wobei die härtbare Beschichtung von Schritt (e) im Wesentlichen aus Polyurethan besteht.

6. Verfahren gemäß einem der Ansprüche 1 bis 5, wobei nach Schritt h) des Aktivierens des ersten Photoinitiators ein flüssiger Photoinitiator auf die härtbare Beschichtung aufgebracht wird.

7. Verfahren gemäß einem der Ansprüche 1 bis 5, wobei:
• die härtbare Beschichtung ferner einen thermischen Initiator umfasst,
• der thermische Initiator während Schritt k) aktiviert wird.

8. Verfahren gemäß einem der vorstehenden Ansprüche, wobei:
• die bei Schritt a) aufgebrachte Kunststoffschicht einen Schaumbildner umfasst,
• das Erhitzen bei Schritt b) ohne Aktivieren des Schaumbildners durchgeführt wird,
• die erste Drucktinte von Schritt c) ferner einen Expansionshemmer enthält,
• der Schaumbildner während Schritt i) aktiviert wird.

9. Verfahren gemäß einem der Ansprüche 1 bis 7, wobei
• die bei Schritt a) aufgebrachte Kunststoffschicht einen Schaumbildner umfasst,
• das Erhitzen bei Schritt b) ohne Aktivieren des Schaumbildners durchgeführt wird,
• die erste Drucktinte von Schritt c) gegebenenfalls einen Expansionshemmer enthält,
• zwischen Schritt c) und Schritt d) eine zweite Drucktinte, die einen zweiten Photoinitiator und/oder einen Expansionshemmer enthält, mit einer zweiten Struktur oder einem zweiten Design auf die Oberfläche der gelierten Kunststoffschicht aufgebracht wird,
• der Schaumbildner während Schritt i) aktiviert wird,
• der zweite Photoinitiator während Schritt k) aktiviert wird.

10. Verfahren gemäß Anspruch 9, wobei der erste Photoinitiator einen höheren Diffusionskoeffizienten als der zweite Photoinitiator aufweist.

11. Verfahren gemäß Anspruch 9, wobei der zweite Photoinitiator ausgewählt ist aus jenen, die eine Wanderungszeit in den Oberflächenbereich der härtbaren Beschichtung aufweist, die größer als die Wanderungszeit des ersten Photoinitiators in den Oberflächenbereich der härtbaren Beschichtung ist.

12. Verfahren gemäß Anspruch 9, wobei der erste Photoinitiator durch eine andere Wellenlänge als der zweite Photoinitiator aktiviert wird.

13. Verfahren gemäß Anspruch 9, wobei der erste Photoinitiator durch ein niedrigeres Energieniveau als der zweite Photoinitiator aktiviert wird.

14. Verfahren gemäß Anspruch 9, wobei der erste Photoinitiator ausgewählt ist aus jenen, die für einen ersten Bereich von elektromagnetischer Strahlung empfindlich sind, und der zweite Photoinitiator ausgewählt ist aus jenen, die für einen zweiten Bereich von elektromagnetischer Strahlung empfindlich aber für den ersten Bereich von elektromagnetischer Strahlung unempfindlich sind.

15. Verfahren gemäß einem der Ansprüche 9 bis 14, wobei der zweite Photoinitiator auf im Wesentlichen die gesamte Oberfläche der härtbaren Beschichtung vor Schritt (h) des Aktivierens des ersten Photoinitiators aufgebracht wird.

16. Verfahren gemäß Anspruch 15, wobei die elektromagnetischen Strahlungen im Wesentlichen aus UV-Strahlungen bestehen.

17. Verfahren gemäß einem der Ansprüche 1 bis 5, wobei
• die bei Schritt a) aufgebrachte Kunststoffschicht einen Schaumbildner umfasst,
• das Erhitzen bei Schritt b) ohne Aktivieren des Schaumbildners durchgeführt wird,
• die zweite, härtbare Beschichtung ferner einen thermischen Initiator umfasst,
• der thermische Initiator während Schritt k) aktiviert wird.

18. Verfahren gemäß einem der Ansprüche 1 bis 5, wobei das Härten von Schritt k) durch Elektronenstrahlbestrahlung durchgeführt wird.

19. Verfahren gemäß einem der Ansprüche 1 bis 18, wobei der Oberflächenbelag abgekühlt wird und dann die Oberfläche vor optionalem mechanischem Prägen wieder erhitzt wird, um sie weich zu machen.

20. Verfahren gemäß einem der Ansprüche 1 bis 19, wobei nach dem Gelieren der Kunststoffschicht bei Schritt (b) der Oberflächenbelag vor dem Aufbringen der Drucktinte gekühlt wird.

21. Oberflächenbelag, erhalten durch das Verfahren gemäß einem der Ansprüche 1 bis 20, umfassend:
a. ein Substrat,
b. eine Kunststoffschicht, die auf dem Substrat angeordnet ist,
c. eine mit einer Struktur oder einem Design auf die Kunststoffschicht gedruckte Tinte,
d. eine ungehärtete Beschichtung, die auf der Kunststoffschicht und der Tinte angeordnet ist,
e. eine gehärtete Beschichtung, die auf der ungehärteten Beschichtung angeordnet ist, wobei die gehärtete Beschichtung, die über der Tinte angeordnet ist, mechanisch geprägt ist.

22. Oberflächenbelag, umfassend:
a. ein Substrat,
b. eine geschäumte und chemisch geprägte Kunststoffschicht, die auf dem Substrat angeordnet ist,
c. eine Tinte, die einen Photoinitiator enthält, mit einem Design auf die geschäumte Kunststoffschicht gedruckt,
d. eine nichtgehärtete Beschichtung oder eine nichtgehärtete Schicht, die auf der geschäumten Kunststoffschicht und der Tinte angeordnet ist,
e. eine gehärtete Beschichtung oder eine gehärtete Schicht, die auf der nichtgehärteten Beschichtung oder einer nichtgehärteten Schicht angeordnet ist, wobei der Teil der gehärteten Beschichtung oder der gehärteten Schicht, der über der Tinte angeordnet ist, chemisch und/oder mechanisch geprägt ist.

23. Oberflächenbelag gemäß Anspruch 22, wobei die Tinte auch einen Inhibitor enthält.

24. Oberflächenbelag gemäß Anspruch 22 oder 23, wobei der Teil der gehärteten Beschichtung oder gehärteten Schicht, der nicht über der Tinte angeordnet ist, mit einer Textur mechanisch geprägt ist, die von dem mechanisch geprägten Teil der über der Tinte angeordneten gehärteten Beschichtung verschieden ist.

25. Oberflächenbelag gemäß einem der Ansprüche 22 bis 24, wobei ferner die gehärtete Beschichtung oder gehärtete Schicht eine Polyurethanbeschichtung umfasst.

## Revendications

1. Procédé de fabrication d'un revêtement de surface, comprenant les étapes séquentielles suivantes :
a. appliquer une couche de plastique par-dessus un substrat,
b. chauffer la couche de plastique à une température qui provoque la gélification de la couche de plastique pour former une couche de plastique gélifiée ayant une surface,
c. appliquer sur la surface de la couche de plastique gélifiée une première encre d'impression contenant un premier photoinitiateur selon un premier motif ou un premier dessin,
d. appliquer un premier revêtement, non durcissable, constitué d'un plastisol ou d'un organosol par-dessus la couche de plastique gélifiée et les premières encres d'impression,
e. appliquer un deuxième revêtement, durcissable, par-dessus ledit premier revêtement et optionnellement le sécher,
f. gélifier ledit premier revêtement,
g. gaufrer par un procédé mécanique le deuxième revêtement, durcissable,
h. activer ledit premier photoinitiateur et durcir les zones du deuxième revêtement, durcissable, disposées par-dessus la première encre d'impression,
i. chauffer le deuxième revêtement, durcissable, la couche de plastique et le substrat, le gaufrage mécanique dans les zones qui ne sont pas disposées par-dessus la première encre d'impression étant ainsi relaxé,
j. optionnellement, gaufrer par un procédé mécanique le deuxième revêtement, durcissable, dans des zones qui ne sont pas disposées par-dessus la première encre d'impression,
k. durcir le deuxième revêtement, durcissable.

2. Procédé selon la revendication 1, dans lequel, à l'étape g), le premier revêtement est également gaufré.

3. Procédé selon la revendication 1, dans lequel le revêtement durcissable de l'étape (e) comprend un polymère dérivé d'uréthane.

4. Procédé selon la revendication 3, dans lequel le revêtement durcissable de l'étape (e) comprend un polyuréthane.

5. Procédé selon la revendication 4, dans lequel le revêtement durcissable de l'étape (e) se compose essentiellement de polyuréthane.

6. Procédé selon l'une quelconque des revendications 1 à 5, dans lequel, après l'étape h) d'activation dudit premier photoinitiateur, un photoinitiateur liquide est appliqué sur le revêtement durcissable.

7. Procédé selon l'une quelconque des revendications 1 à 5, dans lequel :
• ledit revêtement durcissable comprend en outre un initiateur thermique,
• ledit initiateur thermique est activé à l'étape k) .

8. Procédé selon l'une quelconque des revendications précédentes, dans lequel :
• la couche de plastique appliquée à l'étape a) comprend un agent moussant,
• le chauffage de l'étape b) est exécuté sans activer l'agent moussant,
• la première encre d'impression de l'étape c) contient en outre un inhibiteur d'expansion,
• l'agent moussant est activé à l'étape i).

9. Procédé selon l'une quelconque des revendications 1 à 7, dans lequel :
• la couche de plastique appliquée à l'étape a) comprend un agent moussant,
• le chauffage de l'étape b) est exécuté sans activer l'agent moussant,
• la première encre d'impression de l'étape c) contient optionnellement un inhibiteur d'expansion,
• entre l'étape c) et l'étape d), une deuxième encre d'impression contenant un deuxième photoinitiateur et/ou un inhibiteur d'expansion est appliquée sur la surface de la couche de plastique gélifiée selon un deuxième motif ou un deuxième dessin,
• l'agent moussant est activé à l'étape i),
• le deuxième photoinitiateur est activé à l'étape k) .

10. Procédé selon la revendication 9, dans lequel le premier photoinitiateur a un coefficient de diffusion plus élevé que le deuxième photoinitiateur.

11. Procédé selon la revendication 9, dans lequel ledit deuxième photoinitiateur est sélectionné parmi ceux qui ont un temps de migration jusqu'à l'intérieur de ladite zone du revêtement durcissable qui est supérieur au temps de migration dudit premier photoinitiateur jusqu'à l'intérieur de ladite zone du revêtement durcissable.

12. Procédé selon la revendication 9, dans lequel le premier photoinitiateur est activé par une longueur d'onde différente de celle qui active le deuxième photoinitiateur.

13. Procédé selon la revendication 9, dans lequel le premier photoinitiateur est activé par un niveau d'énergie plus bas que le deuxième photoinitiateur.

14. Procédé selon la revendication 9, dans lequel le premier photoinitiateur est sélectionné parmi ceux qui sont sensibles à une première gamme de rayonnements électromagnétiques, et ledit deuxième photoinitiateur est sélectionné parmi ceux qui sont sensibles à une deuxième gamme de rayonnements électromagnétiques mais insensibles à ladite première gamme de rayonnements électromagnétiques.

15. Procédé selon l'une quelconque des revendications 9 à 14, dans lequel ledit deuxième photoinitiateur est appliqué sur la quasi-totalité de la surface du revêtement durcissable avant l'étape (h) d'activation dudit premier photoinitiateur.

16. Procédé selon la revendication 15, dans lequel les rayonnements électromagnétiques consistent essentiellement en rayonnements UV.

17. Procédé selon l'une quelconque des revendications 1 à 5, dans lequel :
• la couche de plastique appliquée à l'étape a) comprend un agent moussant,
• le chauffage de l'étape b) est exécuté sans activer l'agent moussant,
• le deuxième revêtement, durcissable, comprend en outre un initiateur thermique,
• l'initiateur thermique est activé à l'étape k).

18. Procédé selon l'une quelconque des revendications 1 à 5, dans lequel le durcissement de l'étape k) est réalisé au moyen d'une irradiation par un faisceau d'électrons.

19. Procédé selon l'une quelconque des revendications 1 à 18, dans lequel le revêtement de surface est refroidi, puis la surface est réchauffée pour la ramollir avant un gaufrage optionnel par un procédé mécanique.

20. Procédé selon l'une quelconque des revendications 1 à 19, dans lequel, après la gélification de la couche de plastique à l'étape (b), le revêtement de surface est refroidi avant l'application de l'encre d'impression.

21. Revêtement de surface obtenu par le procédé selon l'une quelconque des revendications 1 à 20, comprenant :
a. un substrat,
b. une couche de plastique recouvrant le substrat,
c. une encre imprimée selon un motif ou un dessin sur ladite couche de plastique,
d. un revêtement non durci recouvrant la couche de plastique et l'encre,
e. un revêtement durci recouvrant le revêtement non durci, le revêtement durci recouvrant l'encre étant gaufré par un procédé mécanique.

22. Revêtement de surface comprenant :
a. un substrat,
b. une couche de plastique transformée en mousse et gaufrée par un procédé chimique, recouvrant le substrat,
c. une encre contenant un photoinitiateur imprimée selon un dessin sur ladite couche de plastique transformée en mousse,
d. un revêtement non durci ou une couche non durcie recouvrant la couche de plastique transformée en mousse et l'encre,
e. un revêtement durci ou une couche durcie recouvrant le revêtement non durci ou une couche non durcie, la partie du revêtement durci ou de la couche durcie disposée par-dessus l'encre étant gaufrée par un procédé chimique et/ou par un procédé mécanique.

23. Revêtement de surface selon la revendication 22, dans lequel l'encre contient aussi un inhibiteur.

24. Revêtement de surface selon la revendication 22 ou 23, dans lequel la partie du revêtement durci ou de la couche durcie, qui n'est pas disposée par-dessus l'encre, est gaufrée par un procédé mécanique avec une texture différente de la partie du revêtement durci, gaufrée par un procédé mécanique, qui est disposée par-dessus l'encre.

25. Revêtement de surface selon l'une quelconque des revendications 22 à 24, le revêtement durci ou la couche durcie comprenant en outre un revêtement de polyuréthane.
